# EUROPÄISCHE PATENTANMELDUNG

(11) **EP 3 816 787 A1**
(43) Veröffentlichungstag der Anmeldung: **05.05.2021**
(21) Anmeldenummer: 20204798.1
(22) Anmeldetag: 29.10.2020
(51) Int. Cl.: G06F 3/12

(54) **PRODUKTCODE ZUR BESTELLUNG UND DRUCKERSTEUERUNG**

(30) Priorität: 31.10.2019 DE 202019106067 U
(71) Anmelder: Avery Zweckform GmbH, 83626 Oberlaindern/Valley (DE)
(72) Erfinder: SEEMÜLLER, Julia, 83727 Schliersee (DE); KIRSCHENHOFER, Felix, 83607 Holzkirchen (DE)
(74) Vertreter: Eisenführ Speiser

(57) **Zusammenfassung**

Die vorliegende Erfindung betrifft ein neues System zum Bereitstellen und Bedrucken eines bedruckbaren Materials. Weiterhin betrifft die vorliegende Erfindung eine neue Auswahl- und Steuerungsdatenstruktur.

## Beschreibung

### Technisches Gebiet

Die vorliegende Erfindung betrifft ein System zum Bereitstellen und Bedrucken eines bedruckbaren Materials. Weiterhin betrifft die vorliegende Erfindung eine Auswahl- und Steuerungsdatenstruktur.

### Stand der Technik

Es ist aus der Praxis bekannt, dass zu bedruckende Materialien zunächst in einem separaten Schritt bestellt und bereitgestellt werden oder direkt erworben werden, also Bestellung und Bereitstellung zusammenfallen. Das bereitgestellte, bedruckbare Material wird daraufhin einem Drucker zugeführt. Der Drucker muss zum Steuern des Druckvorgangs auf die Form, das Format und/oder die Beschaffenheit des zu bedruckenden Materials eingestellt werden, damit der Druckvorgang ein zufriedenstellendes Ergebnis liefert. Vielfach kommt es bei der Einstellung des Druckers bzgl. der vorstehend erwähnten Eigenschaften zu Fehleingaben seitens des Nutzers, was zur Folge hat, dass das zu bedruckende Material schlecht oder falsch bedruckt wird, wodurch das Druckerzeugnis im Ergebnis unbrauchbar ist und Druckerressourcen vermeidbar verbraucht worden sind.

### Aufgabe

Aufgabe der vorliegenden Erfindung ist es deshalb, ein System bereitzustellen, welches einerseits angefordertes, zu bedruckendes Material zuverlässig bereitstellt und andrerseits das bereitgestellte, zu bedruckende Material fehlerfrei bedruckt.

### Offenbarung der Erfindung

Gelöst wird diese Aufgabe durch ein System nach Anspruch 1. Gegenstand der Unteransprüche sind vorteilhafte Fortbildungen des Erfindungsgegenstandes des Anspruchs 1.

Ein erfindungsgemäßes System zum Bereitstellen und Bedrucken eines bedruckbaren Materials umfasst wenigstens eine Clientvorrichtung mit einer Benutzerschnittstelle, welche dazu ausgelegt ist, eine Nutzereingabe zum Auswählen des bedruckbaren Materials zu empfangen. Die Clientvorrichtung ist dazu ausgelegt, aus der Nutzereingabe einen Materialauswahl- und Vorlagecode zu generieren und den Materialauswahl- und Vorlagecode zum Bereitstellen des bedruckbaren Materials zu versenden. Das erfindungsgemäße System umfasst weiter eine Servervorrichtung, die dazu ausgelegt ist, mit wenigstens einer Clientvorrichtung zu kommunizieren und nach dem Empfangen des Materialauswahl- und Vorlagecodes die Bereitstellung des bedruckbaren Materials zu veranlassen. Ferner umfasst das erfindungsgemäße System wenigstens eine Druckvorrichtung, die dazu ausgelegt ist, mit der Clientvorrichtung zu kommunizieren und basierend auf zumindest eines Teils des Materialauswahl- und Vorlagecodes das bereitgestellte, zu bedruckende Material zu bedrucken.

Die Clientvorrichtung kann ein Computer oder ein "smart device" sein, welches dazu geeignet ist, mit einer Servereinrichtung und einer Druckereinrichtung zu kommunizieren. Die Kommunikation kann über das Internet oder lokal erfolgen, wobei die Verbindung eine WLAN- oder Ethernet-Verbindung sein kann; lokal ist auch eine Bluetooth- oder USB-Verbindung vorstellbar.

Der Nutzer kann sowohl ein Mensch als auch eine Maschine sein, sodass im Falle des letztgenannten das System auch im Rahmen der Industrie 4.0 einsetzbar sein kann.

Die Nutzereingaben erfolgen über die Benutzerschnittstelle, welche vorzugsweise eine Anzeigevorrichtung und Eingabemittel aufweist.

Mit Hilfe der Benutzerschnittstelle kann der Nutzer das zu bedruckende Material und die benötigte Menge des zu bedruckenden Materials auswählen. Vorzugsweise werden dem Nutzer diesbezüglich Auswahloptionen auf der Anzeigevorrichtung angeboten. Die Auswahloptionen sind gruppiert, sodass der Nutzer innerhalb der Gruppen nur noch aus den verfügbaren Varianten auswählen kann. Vorzugsweise sind die Materialien wie folgt gruppiert: Bestellmenge, Kategorie des Materials (z.B. Etikett), Grundmaterial (z.B. recycelbares Papier), Klebstoff (z.B. permanenter Klebstoff), Farbe (z.B. cremeweiß), Form (z.B. rechteckig) und Format (z.B. DIN A4). Jede Gruppierung kann z.B. als eine Dropdown-Liste, aus der der Nutzer die verfügbaren Varianten auswählen kann, vorgesehen sein. Die Auswahloptionen der Gruppierungen können einander auch bedingen, wodurch die Auswahlentscheidung bezüglich einer Gruppierung die Auswahlentscheidung mindestens einer weiteren Gruppierung vorgibt.

Hat der Nutzer seine Auswahlentscheidungen getroffen, so ist das zu bedruckende Material und die Bestellmenge eindeutig bestimmt.

Die Clientvorrichtung generiert aus den Auswahlentscheidungen des Nutzers, welche die Eigenschaften des zu bedruckenden Materials betreffen, einen Materialauswahl- und Vorlagecode. Der Materialauswahl- und Vorlagecode kann maschinenlesbar sein.

Im Rahmen des Bestellvorganges kann es erforderlich sein, dass der Nutzer zudem über die Benutzerschnittstelle einen Lieferort, welcher eine Adresse und einen Adressaten umfasst, angibt, an dem das zu bedruckende Material bereitgestellt werden soll.

Der Materialauswahl- und Vorlagecode und die Bestellmenge sowie der Lieferort werden anschließend an eine Servereinrichtung übermittelt.

Zeitgleich, oder zeitversetzt, kann der Materialauswahl- und Vorlagecode auch an eine Druckereinrichtung, welche das bereitgestellte, zu bedruckende Material bedrucken soll, übermittelt werden.

Die Servervorrichtung empfängt und verarbeitet die Bestellmenge und den Materialauswahl- und Vorlagecode. Im Zuge des Verarbeitens wird u.a. der verfügbare Warenbestand geprüft. Ist das angeforderte Material in der bestellten Menge verfügbar, so veranlasst die Servereinrichtung eine Bereitstellung. Die Bereitstellung kann eine Warenlieferung aus einem Warenlager an den angegebenen Lieferort sein. Sollte das angeforderte Material nicht mehr oder nicht mehr in der angeforderten Bestellmenge verfügbar sein, so kann die Servervorrichtung eine Benachrichtigung darüber an die Clientvorrichtung, welche die Benachrichtigung vorzugsweise über ihre Anzeigevorrichtung dem Nutzer darstellt, versenden.

Nach Erhalt bzw. nach dem Bereitstellen des bedruckbaren Materials kann der Nutzer mit Hilfe der Benutzerschnittstelle zumindest einen Teil des Materialauswahl- und Vorlagecodes in die Clientvorrichtung eingeben oder diesen aus dem Speicher der Clientvorrichtung abrufen, um das bereitgestellte, in eine Druckvorrichtung eingebrachte, bedruckbare Material zu bedrucken.

Auf der Clientvorrichtung kann entweder eine Applikation des Materialbereitstellers installiert sein, in welche der Nutzer zumindest einen Teil des entsprechenden Materialauswahl- und Vorlagecode eingeben kann. Vorstellbar ist aber auch, dass der Nutzer zumindest einen Teil des Materialauswahl- und Vorlagecodes auf der Clientvorrichtung in eine webbrowserbasierte Applikation eingibt, welche auf einer Servervorrichtung des Materialbereitstellers installiert ist und auf dieser ausgeführt wird.

Auf Basis des zumindest einen Teils des Materialauswahl- und Vorlagecodes kann die entsprechende Applikation eine Dokumentenvorlage generieren, welche auf die im Materialauswahl- und Vorlagecode enthaltenen Materialeigenschaften konfiguriert ist. Vorzugsweise ist die Dokumentenvorlage auf die Eigenschaften Format und Form des zu bedruckenden Materials konfiguriert.

Die Dokumentenvorlage kann nach ihrer Generierung in der entsprechenden Applikation bearbeitet werden und/oder wird dem Nutzer als Download bereitgestellt, um lokal mit einer weiteren Applikation auf der Clientvorrichtung bearbeitet zu werden.

In Bezug auf beide möglichen Applikationen zur Eingabe des zumindest einen Teils des Materialauswahl- und Vorlagecodes kann alternativ auch vorgesehen sein, dass durch das Eingeben des zumindest einen Teils des Materialauswahl- und Vorlagecodes eine entsprechende Dokumentenvorlage aus einer in der Applikation hinterlegten Vielzahl von vorkonfigurierten Dokumentenvorlagen ausgewählt wird.

Zum Bedrucken des bearbeiteten Dokumentes ruft die entsprechende Applikation das Softwaremodul der Druckvorrichtung auf, über welches der Nutzer weitere Einstellungen bezüglich des Bedruckens des zu bedruckenden Materials vornehmen kann und über welches der Nutzer das Ausführen des Bedruckens veranlasst.

In einer weiteren vorteilhaften Ausführungsform kann die auf der Clientvorrichtung installierte Applikation oder die webbasierte Applikation unmittelbar die Einstellungen im Softwaremodul der Druckvorrichtung für das Bedrucken anpassen. Somit würde zumindest ein Teil des in die entsprechende Applikation eingegebenen Materialauswahl- und Vorlagecodes unmittelbar in Steuerbefehle für die Druckvorrichtung übersetzt werden.

Die Druckvorrichtung verarbeitet den von der Clientvorrichtung über das Softwaremodul versandten Druckauftrag und stellt die Druckparameter auf das zu bedruckende Material für den Druckvorgang ein. Während des Druckvorgangs wird die Druckvorrichtung auf Basis der initialisierten Druckparameter gesteuert.

Somit steuert der Materialauswahl- und Vorlagecode den Druckvorgang des bereitgestellten, zu bedruckenden Materials zumindest mittelbar.

Während des Druckvorgangs kann die Druckvorrichtung Informationen über den Verlauf des Drucks an die Clientvorrichtung senden, welche dem Nutzer vorzugsweise an der Anzeigevorrichtung ausgegeben werden können.

Bevorzugt weist der Materialauswahl- und Vorlagecode wenigstens einen Abschnitt auf, welcher eine Information zu mindestens einer der folgenden Eigenschaften des zu bedruckenden Materials umfasst: Kategorie, bedruckbares Grundmaterial, Klebstoff, Farbe, Format oder Form.

Vorzugsweise weist der Materialauswahl- und Vorlagecode mehr als einen Abschnitt auf, so kann einem ersten Abschnitt eine Kategorie, einem zweiten Abschnitt eine Information über das bedruckbare Grundmaterial, den Klebstoff und die Farbe, einem dritten Abschnitt ein Format und einem vierten Abschnitt eine Form zugeordnet sein.

Die Reihenfolge der Abschnitte innerhalb des Materialauswahl- und Vorlagecodes ist nicht festgelegt.

In einer vorteilhaften Ausführungsform sind mindestens der dritte und der vierte Abschnitt dafür konfiguriert, die Dokumentenvorlage zu generieren und dadurch zumindest mittelbar zumindest einen Teil der Druckparameter der Druckvorrichtung vorzugeben. Für einen Druckvorgang benötigt die Druckvorrichtung wenigstens einen Abschnitt, der eine Information über das Format und die Form enthält, sodass der Startpunkt und der Druckbereich auf dem zu bedruckenden Material eindeutig bestimmt sind.

Vorzugsweise ist der Materialauswahl- und Vorlagecode auf einer Speichereinheit der Clienteinrichtung und/oder der Druckereinrichtung zum Bereitstellen einer Nutzereingabehistorie speicherbar. Zudem können in der Nutzereingabehistorie auch die entsprechenden Bestellmengen gespeichert sein. Das bereitgestellte, zu bedruckende Material kann, nachdem es bereitgestellt wurde, mit den Einträgen in der Nutzereingabehistorie abgeglichen werden, wodurch eine Falschlieferung vom Druckvorgang ausgeschlossen werden kann.

In einer weiteren vorteilhaften Ausführungsform kann jedem vom Nutzer mittels der Benutzerschnittstelle in die Clienteinrichtung eingegebenen Datensatz aus einem Materialauswahl- und Vorlagecode, einer zugehörigen Bestellmenge und einem Lieferort eine Identifikationsnummer zum Identifizieren und Verfolgen des Datensatzes zugeordnet sein. Die Identifikationsnummer ermöglicht es, die Kommunikation bezüglich einer spezifischen Bestellung zwischen Clientvorrichtung und Servervorrichtung oder zwischen Servervorrichtung und Druckvorrichtung oder aber auch zwischen Clientvorrichtung und Druckvorrichtung zu vereinfachen und zu beschleunigen.

Die Clientvorrichtung kann Materialauswahl- und Vorlagecode, Bestellmenge, Lieferort und Identifikationsnummer an die Servervorrichtung senden. Die Servervorrichtung verarbeitet die Bestellung und meldet gegebenenfalls Abweichungen zwischen bestellter und verfügbarer Menge an die Clientvorrichtung lediglich mittels der Identifikationsnummer zurück. Mittels der Indikationsnummer und beispielsweise der Nutzereingabehistorie ist die Rückmeldung einem gespeicherten Datensatz schneller zuordenbar. Dies gilt analog für die Kommunikation zwischen der Clientvorrichtung und Druckvorrichtung oder zwischen Servervorrichtung und Druckvorrichtung.

Die Identifikationsnummer kann eine fortlaufende Zahl, eine Zahlen- und/oder Buchstabenkombination oder aber auch ein Zeitstempel sein.

Bevorzugt wird der Materialauswahl- und Vorlagecode vor dem Versenden an die Servereinrichtung verschlüsselt. Aber auch eine Verschlüsselung beim Versenden des Materialauswahl- und Vorlagecode an eine Druckvorrichtung ist vorstellbar, insbesondere, wenn die Clienteinrichtung und die Druckvorrichtung über ein Netzwerk miteinander verbunden sind. Folglich sind die Servervorrichtung und die Druckvorrichtung vorzugsweise auch dazu ausgelegt, den Materialauswahl- und Vorlagecode nach dem Empfangen zu entschlüsseln, um diesen verarbeiten zu können.

In einer weiteren bevorzugten Ausführungsform ist das zu bedruckende Material mit dem Materialauswahl- und Vorlagecode versehen, sodass das bereitgestellte, zu bedruckende Material vor dem Zuführen in die Druckvorrichtung anhand des Materialauswahl- und Vorlagecodes überprüft werden kann. Weiterhin kann auch die das bedruckbare Material umgebende Verpackung mit dem Materialauswahl- und Vorlagecode versehen sein.

Weitere Vorteile und bevorzugte Ausgestaltungen werden nachfolgend mit Verweis auf die beigefügten Figuren beschrieben.
- Fig. 1: Anordnung des erfindungsgemäßen Systems zum Bereitstellen und Bedrucken eines bedruckbaren Materials.
- Fig. 2: Abschnitte des Materialauswahl- und Vorlagecodes.
- Fig. 3: Abfolge des Anforderns und Bereitstellens eines bedruckbaren Materials.

### Beschreibung eines Ausführungsbeispiels

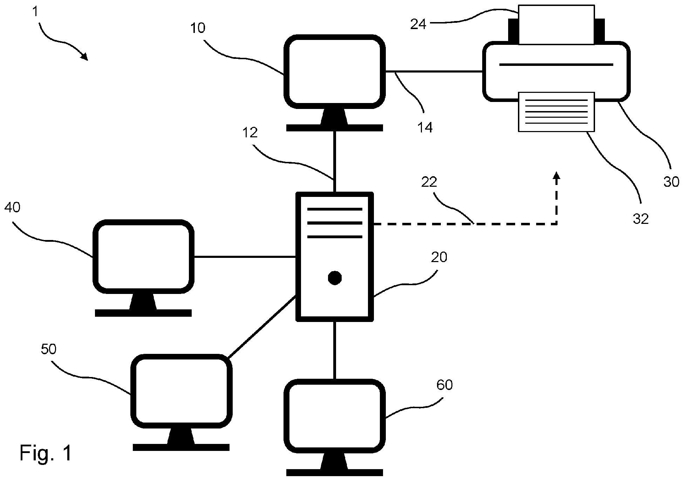

Fig. 1 zeigt ein erfindungsgemäßes System 1 zum Bereitstellen und Bedrucken eines bedruckbaren Materials. Das System 1 weist die Clientvorrichtungen mit Benutzerschnittstelle 10, 40, 50, 60, eine Servervorrichtung 20 und eine Druckvorrichtung 30 auf. Die Clientvorrichtungen 10, 40, 50 und 60 sind mit der Servervorrichtung 20 verbunden. Die Verbindung kann eine Internet-Verbindung oder eine Verbindung aus der Gruppe von Bluetooth-, WLAN-, Ethernet-, oder USB-Verbindung sein.

Nachfolgend wird die Kommunikation zwischen Clientvorrichtung 10, Servervorrichtung 20 und Druckvorrichtung 30 betrachtet.

Clientvorrichtung 10 ist mittels Verbindung 12 mit Servereinrichtung 20 verbunden. Weiterhin ist Clientvorrichtung 10 mittels Verbindung 14 mit einer Druckvorrichtung 30 verbunden, wobei auch Verbindung 14 eine Internet-Verbindung oder eine Verbindung aus der Gruppe von Bluetooth-, WLAN-, Ethernet-, oder USB-Verbindung sein kann.

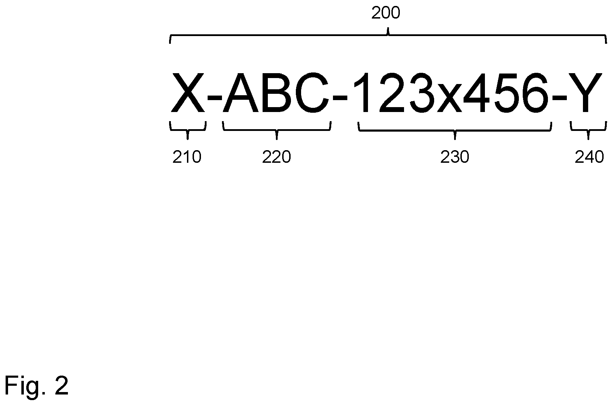

Ein Nutzer gibt seinen Bedarf an zu bedruckendem Material über die Benutzerschnittstelle der Clienteinrichtung 10 in Clienteinrichtung 10 ein, wobei die Eingabe in einer Software-Applikation oder einer webbrowserbasierten Applikation erfolgen kann. Aus der Nutzereingabe wird ein Materialauswahl- und Vorlagecode 200, wie in Fig. 2 dargestellt, generiert.

Materialauswahl- und Vorlagecode 200 umfasst wenigstens einen ersten Abschnitt 210, einen zweiten Abschnitt 220, einen dritten Abschnitt 230 und einen vierten Abschnitt 240.

Aus Gründen der effizienten Speichernutzung ist jede Auswahlentscheidung vorzugsweise durch lediglich ein Symbol, eine Nummer oder einen Buchstaben repräsentiert.

Dem ersten Abschnitt 210 ist die Kategorie des zu bedruckenden Materials zugeordnet. Als Kategorie ist z.B. ein Etikett zu verstehen. Für den Fall, dass der Nutzer die Kategorie "Etikett" ausgewählt hat, würde Abschnitt210 z.B. nur ein "E" aufweisen.

Dem zweiten Abschnitt 220 ist das Grundmaterial, der Klebstoff und die Farbe des zu bedruckenden Materials zugeordnet. Wählt der Nutzer beispielsweise ein recycelbares Papier "R" mit einem permanenten Klebstoff "P" in cremeweiß "C" aus, so kann Abschnitt 220 folgende Buchstaben aufweisen: RPC.

Dem dritten Abschnitt 230 ist das Format zugeordnet. Beispielsweise hat das DIN-A4-Format die Maße 210 mm x 297 mm. Für das DIN-A4-Format weist Abschnitt 230 folgende Angabe auf: 210x297. Die Formatmaße werden zur vereinfachten Eingabe auf ganze Millimeter auf- bzw. abgerundet. Aus der Reihenfolge der Maßangabe des Formats kann sich das Hoch- bzw. Querformat als Ausrichtung des zu bedruckenden Materials ergeben.

Dem vierten Abschnitt 240 ist die Form des zu bedruckenden Materials zugeordnet. Bezugnehmend auf das Beispiel von Abschnitt 230 könnte die Auswahl einer rechteckigen Form durch den Buchstaben "R" repräsentiert werden.

Der Materialauswahl- und Vorlagecode 200 der bespielhaften Abschnitte 210, 220, 230 und 240 würde wie folgt lauten: E-RPC-210x297-R.

Bezogen auf die Darstellung des Systems 1 in Fig. 1 wird Materialauswahl- und Vorlagecode 200 zusammen mit einer Bestellmenge sowie einem Lieferort von Clientvorrichtung 10 über Verbindung 12 an Servervorrichtung 20 übermittelt. Dem Datensatz aus Materialauswahl- und Vorlagecode 200, Bestellmenge und Lieferort kann auch eine Identifikationsnummer zugeordnet sein, welche eine vereinfachte Zuordnung bei der Kommunikation zwischen Clientvorrichtung 10 und Servervorrichtung 20 bezüglich einer spezifischen Bestellung ermöglicht.

Servervorrichtung 20 gleicht die Bestellmenge mit dem Vorrat, welcher dem Materialauswahl- und Vorlagecode 200 zugeordnet ist, ab. Ist der Vorrat ausreichend, so veranlasst Servervorrichtung 20 ein Bereitstellen der bestellten Menge des zu bedruckenden Materials 24 über Verbindung 22 an den Lieferort, welcher vorzugsweise der Standort der Druckvorrichtung 30 ist. Ist der Vorrat nicht ausreichend, so meldet Servervorrichtung 20 über Verbindung 12 an Clientvorrichtung 10 zurück, dass der bestellte Bedarf nicht bereitgestellt werden kann und ermöglicht dem Nutzer so, beispielsweise seinen Bedarf entweder anzupassen oder eine neue Auswahl zu treffen oder die Anforderung zu stornieren.

Der erzeugte Materialauswahl- und Vorlagecode 200 kann auf einer Speichereinheit der Clientvorrichtung 10 und/oder auf einer Speichereinheit der Druckvorrichtung 30 gespeichert sein. Verbindung 14 ermöglicht zugleich, Fehler während des Druckvorgangs oder aber die Fertigstellung des Drucks an Clientvorrichtung 10 zu senden.

Nach dem Bereitstellen des zu bedruckenden Materials und dem Einbringen des zu bedruckenden Materials in Druckvorrichtung 30 gibt der Nutzer zumindest einen Teil des Materialauswahl- und Vorlagecodes 200 in die auf der Clientvorrichtung 10 installierten Applikation oder der webbrowserbasierten Applikation ein. Möglich ist aber auch, dass der Nutzer Materialauswahl- und Vorlagecode 200 aus dem Speicher der Clientvorrichtung 10 aufruft und weiterverwendet. Die entsprechende Applikation generiert auf Basis des zumindest einen Teils des Materialauswahl- und Vorlagecodes 200 eine Dokumentenvorlage, welche entweder in der entsprechenden Applikation bearbeitet oder als nach einem Download der generierten Dokumentenvorlage mit einer weiteren Applikation der Clientvorrichtung 10 bearbeitet werden kann. Nach der Bearbeitung wird ein Druckauftrag über Verbindung 14 an die Druckvorrichtung 30 über das auf der Clientvorrichtung installierte Softwaremodul der Druckvorrichtung 30 erzeugt, wobei im Softwaremodul weitere Einstellungen hinsichtlich des Druckvorgangs seitens des Nutzers vorgenommen werden können. Anhand des Druckauftrags initialisiert Druckvorrichtung 30 die Druckparameter und steuert den Druckvorgang mittels jener Druckparameter. Zumindest ein Teil des Materialauswahl- und Vorlagecodes 200, d.h. die in zumindest einem der Abschnitte 210, 220, 230 und 240 enthaltenen Informationen bezüglich des zu bedruckenden Materials 24, wird zumindest mittelbar von Druckvorrichtung 30 verwendet, um den Druckvorgang zu steuern und ein Druckerzeugnis 32 zu erzeugen.

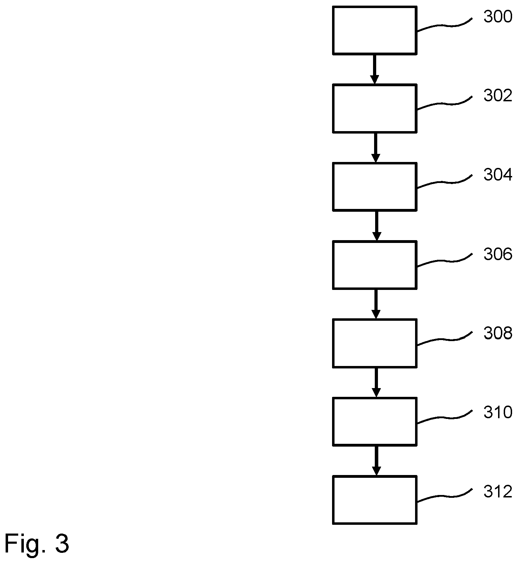

Fig. 3 stellt das Verfahren zur Erzeugung eines Druckererzeugnisses 32 mittels des erfindungsgemäßen Systems 1 dar. In einem ersten Schritt 300 erfolgt die Nutzereingabe per Benutzerschnittstelle in beispielsweise Clientvorrichtung 10. In einem Schritt 302 generiert Clientvorrichtung 10 einen Materialauswahl- und Vorlagecode 200 aus den Nutzereingaben. In einem Schritt 304 wird Materialauswahl- und Vorlagecode 200 zusammen mit einer Bestellmenge und einem Lieferort an Servervorrichtung 20 gesandt. In einem Schritt 306 wird der empfangene Materialauswahl- und Vorlagecode 200 von der Servervorrichtung verarbeitet und das Bereitstellen des zu bedruckenden Materials veranlasst. In einem weiteren Schritt 308 wird das angeforderte, zu bedruckende Material in der Druckvorrichtung 30 bereitgestellt und zugeführt. In einem Schritt 310 wird zumindest ein Teil des Materialauswahl- und Vorlagecodes 200 in Clientvorrichtung 30 eingegeben und eine Dokumentenvorlage generiert und bearbeitet. In einem Schritt 312 wird schließlich ein Druckauftrag an Druckvorrichtung 30 gesandt und der Druckvorgang mittels der initialisierten Druckparameter, welche zumindest mittelbar die Vorgaben des Materialauswahl- und Vorlagecodes 200 umfassen, gesteuert.

## Patentansprüche

1. System (1) zum Bereitstellen und Bedrucken eines bedruckbaren Materials, umfassend:
wenigstens eine Clientvorrichtung (10; 40; 50; 60) mit einer Benutzerschnittstelle, welche dazu ausgelegt ist, eine Nutzereingabe zum Auswählen des bedruckbaren Materials zu empfangen, wobei die Clientvorrichtung (10; 40; 50; 60) dazu ausgelegt ist, aus der Nutzereingabe einen Materialauswahl- und Vorlagecode (200) zu generieren und den Materialauswahl- und Vorlagecode (200) zum Bereitstellen des bedruckbaren Materials zu versenden;
eine Servervorrichtung (20), die dazu ausgelegt ist, mit wenigstens einer Clientvorrichtung (10; 40; 50; 60) zu kommunizieren und nach dem Empfangen des Materialauswahl- und Vorlagecodes (200) die Bereitstellung des bedruckbaren Materials zu veranlassen; und
wenigstens eine Druckvorrichtung (30), die dazu ausgelegt ist, mit der Clientvorrichtung (10; 40; 50; 60) zu kommunizieren und basierend auf zumindest eines Teils des Materialauswahl- und Vorlagecodes (200) das bereitgestellte, zu bedruckende Material zu bedrucken.

2. System (1) nach Anspruch 1, wobei der Materialauswahl- und Vorlagecode (200) wenigstens einen Abschnitt (210; 220; 230; 240) aufweist, welcher eine Information zu mindestens einer der folgenden Eigenschaften des zu bedruckenden Materials umfasst:
Kategorie, bedruckbares Grundmaterial, Klebstoff, Farbe, Format oder Form.

3. System (1) nach Anspruch 2, wobei der Materialauswahl- und Vorlagecode (200) wenigstens einen ersten Abschnitt (210) oder vorzugsweise einen zweiten Abschnitt (220) oder weiter vorzugsweise einen dritten Abschnitt (230) oder noch weiter vorzugsweise einen vierten Abschnitt (240) aufweist.

4. System (1) nach Anspruch 3, wobei die Reihenfolge des ersten Abschnitts (210), des zweiten Abschnitts (220), des dritten Abschnitts (230) und des vierten Abschnitts (240) des Materialauswahl- und Vorlagecodes (200) nicht festgelegt ist.

5. System (1) nach Anspruch 3 oder 4, wobei eine Kategorie des zu bedruckenden Materials dem ersten Abschnitt (210) zuordenbar ist, und
wobei ein bedruckbares Grundmaterial, ein Klebstoff und eine Farbe des zu bedruckenden Materials dem zweiten Abschnitt (220) zuordenbar sind, und
wobei ein Format des zu bedruckenden Materials dem dritten Abschnitt (230) zuordenbar ist, und
wobei eine Form des zu bedruckenden Materials dem vierten Abschnitt (240) zuordenbar ist.

6. System (1) nach Anspruch 5, wobei ferner mindestens der dritte und der vierte Abschnitt (230; 240) dafür konfiguriert sind, die Druckvorrichtung (30) bezogen auf das zu bedruckende Material einzustellen.

7. System (1) nach einem der Ansprüche 1 bis 6, wobei die Clienteinrichtung (10; 40; 50; 60) mit der Benutzerschnittstelle ferner dazu ausgelegt ist, eine Bestellmenge und/oder einen Lieferort des zu bedruckenden Materials zu erfassen und diese zusammen mit dem Materialauswahl- und Vorlagecode (200) an die Servereinrichtung (20) zu senden.

8. System (1) nach Anspruch 7, wobei die Servereinrichtung (20) die Bestellmenge mit einem Bestand des zu bedruckenden Materials abgleicht, wobei ein ausreichender Bestand ein Bereitstellen und ein nicht ausreichender Bestand ein Rückmelden an die Clientvorrichtung (10; 40; 50; 60) vorsieht.

9. System (1) nach einem der Ansprüche 1 bis 8, wobei der Materialauswahl- und Vorlagecode (200) auf einer Speichereinheit der Clienteinrichtung (10; 40; 50; 60) und/oder der Druckereinrichtung (30) zum Bereitstellen einer Nutzereingabehistorie speicherbar ist.

10. System (1) nach einem der Ansprüche 1 bis 9, wobei jedem vom Nutzer mittels der Benutzerschnittstelle in die Clienteinrichtung (10; 40; 50; 60) eingegebenen Datensatz aus einem Materialauswahl- und Vorlagecode (200), einer zugehörigen Bestellmenge und/oder einem zugehörigen Lieferort eine Identifikationsnummer zum Identifizieren und Verfolgen des Datensatzes zuordenbar ist.

11. System (1) nach einem der Ansprüche 1 bis 10, wobei die Clientvorrichtung (10; 40; 50; 60) dazu ausgelegt ist, den Materialauswahl- und Vorlagecode (200) vor dem Versenden zu verschlüsseln, und wobei die Servervorrichtung (20) und/oder die Druckvorrichtung (30) dazu ausgelegt ist, den Materialauswahl- und Vorlagecode (200) nach dem Empfangen zu entschlüsseln.

12. System (1) nach einem der Ansprüche 1 bis 11, wobei das bereitgestellte, bedruckbare Material und/oder eine das bereitgestellte, bedruckbare Material umgebende Verpackung den Materialauswahl- und Vorlagecode (200) aufweist.

13. Auswahl- und Vorlagedatenstruktur (200), wenigstens einen Abschnitt (210; 220; 230; 240) aufweisend, welcher eine Information zu mindestens einer der folgenden Eigenschaften eines zu bedruckenden Materials umfasst:
Kategorie, bedruckbares Grundmaterial, Klebstoff, Farbe, Format und Form.

14. Auswahl- und Vorlagedatenstruktur (200) nach Anspruch 13, wobei die Auswahl- und Vorlagedatenstruktur (200) wenigstens einen ersten Abschnitt (210) oder vorzugsweise einen zweiten Abschnitt (220) oder weiter vorzugsweise einen dritten Abschnitt (230) oder noch weiter vorzugsweise einen vierten Abschnitt (240) aufweist.

15. Auswahl- und Vorlagedatenstruktur (200) nach Anspruch 14, wobei die Reihenfolge des ersten Abschnitts (210), des zweiten Abschnitts (220), des dritten Abschnitts (230) und des vierten Abschnitts (240) der Auswahl- und Vorlagedatenstruktur (200) nicht festgelegt ist.

16. Auswahl- und Vorlagedatenstruktur (200) nach Anspruch 14 oder 15, wobei eine Kategorie des zu bedruckenden Materials dem ersten Abschnitt (210) zuordenbar ist, und
wobei ein bedruckbares Grundmaterial, ein Klebstoff und eine Farbe des zu bedruckenden Materials dem zweiten Abschnitt (220) zuordenbar sind, und
wobei ein Format des zu bedruckenden Materials dem dritten Abschnitt (230) zuordenbar ist, und
wobei eine Form des zu bedruckenden Materials dem vierten Abschnitt (240) zuordenbar ist.
